(19) Europäisches Patentamt / European Patent Office / Office européen des brevets

(11) **EP 3 508 452 A1**

(12) **EUROPEAN PATENT APPLICATION**
published in accordance with Art. 153(4) EPC

(43) Date of publication:
**10.07.2019 Bulletin 2019/28**

(21) Application number: **17845936.8**

(22) Date of filing: **19.07.2017**

(51) Int Cl.:
*C01G 51/00* (2006.01)       *C01B 32/90* (2017.01)
*C01B 32/949* (2017.01)       *C22C 1/05* (2006.01)
*C22C 29/08* (2006.01)

(86) International application number:
**PCT/JP2017/026157**

(87) International publication number:
**WO 2018/042926 (08.03.2018 Gazette 2018/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.08.2016 JP 2016167856**

(71) Applicant: **Sumitomo Electric Industries, Ltd.**
**Osaka-shi, Osaka 541-0041 (JP)**

(72) Inventors:
• **ONOKI, Takamasa**
  **Itami-shi**
  **Hyogo 664-0016 (JP)**
• **AWATA, Hideaki**
  **Itami-shi**
  **Hyogo 664-0016 (JP)**

(74) Representative: **Boult Wade Tennant LLP**
**5th Floor, Salisbury Square House**
**8, Salisbury Square**
**London EC4Y 8AP (GB)**

(54) **AQUEOUS SOLUTION COMPOSITION AND METHOD FOR PRODUCING SAME, OXIDE POWDER AND METHOD FOR PRODUCING SAME, CARBIDE POWDER AND METHOD FOR PRODUCING SAME, AND SUPER-HARD ALLOY AND METHOD FOR PRODUCING SAME**

(57)    An aqueous solution composition contains more than or equal to 10 mass% and less than or equal to 30 mass% of tungstate ions relative to 1 kg of water, more than or equal to 0.05 mass% and less than or equal to 5 mass% of transition metal ions relative to 1 kg of water, and a remainder of counter anions and water. The transition metal ions include cobalt ions. The counter anions include organic acid ions. The organic acid ions are multidentate ligands.

FIG.1

START
101 DISSOLUTION OF TUNGSTEN OXIDE
102 ADDITION OF ORGANIC ACID
103 DRYING
104 RE-DISSOLUTION
105 ADDITION OF TRANSITION METAL SALT
200 SPRAY-DRYING
300 CARBONIZATION
400 SINTERING
END

EP 3 508 452 A1

**Description**

TECHNICAL FIELD

The present disclosure relates to an aqueous solution composition and a method for manufacturing the same, an oxide powder and a method for manufacturing the same, a carbide powder and a method for manufacturing the same, and a cemented carbide and a method for manufacturing the same.

The present application claims priority to Japanese Patent Application No. 2016-167856 filed on August 30, 2016, the entire content of which is incorporated herein by reference.

BACKGROUND ART

Japanese Patent Laying-Open No. 2010-077523 (PTL 1) discloses a carbide powder as a raw material for a cemented carbide.

CITATION LIST

PATENT LITERATURE

PTL 1: Japanese Patent Laying-Open No. 2010-077523
PTL 2: International Publication No. 2010/024160
PTL 3: Japanese Patent Laying-Open No. 2010-077524
PTL 4: International Publication No. 2010/024159
PTL 5: Japanese Patent Laying-Open No. S59-025950
PTL 6: International Publication No. 2010/079752
PTL 7: Japanese Patent Laying-Open No. 2003-112916

SUMMARY OF INVENTION

An aqueous solution composition in accordance with one aspect of the present disclosure contains more than or equal to 10 mass% and less than or equal to 30 mass% of tungstate ions relative to 1 kg of water, more than or equal to 0.05 mass% and less than or equal to 5 mass% of transition metal ions relative to 1 kg of water, and a remainder of counter anions and water. The transition metal ions include cobalt ions. The counter anions include organic acid ions. The organic acid ions are multidentate ligands.

An oxide powder in accordance with one aspect of the present disclosure includes oxide particles having an average particle size of less than or equal to 2 $\mu$m. The oxide particles are porous and spherical. The oxide particles include a composite oxide. The composite oxide contains a transition metal, tungsten, and oxygen. The transition metal includes cobalt.

A carbide powder in accordance with one aspect of the present disclosure includes carbide particles having an average particle size of less than or equal to 10 nm. The carbide particles include a composite carbide. The composite carbide contains a transition metal, tungsten, and carbon. The transition metal includes cobalt.

A cemented carbide in accordance with one aspect of the present disclosure includes solid solution particles having an average particle size of less than or equal to 50 nm. The solid solution particles contain a transition metal, tungsten, and carbon. The transition metal includes cobalt.

BRIEF DESCRIPTION OF DRAWINGS

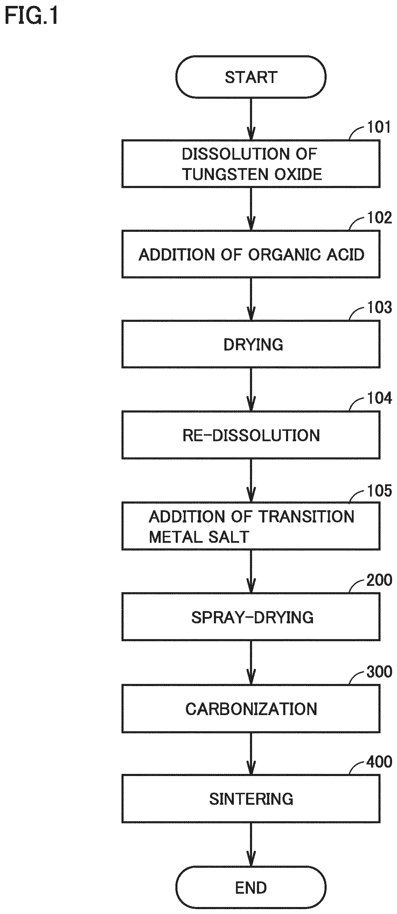

Fig. 1 is a flowchart schematically showing a method for manufacturing an aqueous solution composition, an oxide powder, a carbide powder, and a cemented carbide in accordance with an embodiment of the present disclosure.

DETAILED DESCRIPTION

[Problem to be Solved by the Present Disclosure]

Tungsten carbides are often used as raw materials for cemented carbides. However, the reserve of tungsten in the earth's crust is small and its localities are also unevenly distributed. Accordingly, replacing a portion of tungsten with another transition metal is under consideration.

PTL 1 proposes a carbide powder in which a transition metal such as cobalt is forcibly dissolved in a tungsten carbide as a solid solute, as a raw material for a cemented carbide. However, there is room for improvement in mechanical properties, especially hardness, in the cemented carbide manufactured from this carbide powder.

An object of the present disclosure is to provide a cemented carbide having a high hardness.

[Description of Embodiment of the Present Disclosure]

First, an embodiment of the present disclosure will be described in list form.

In the present specification, a "transition metal" shall refer to a transition metal other than tungsten (W). Similarly, "transition metal ions" shall refer to transition metal ions other than tungsten ions.

[1] An aqueous solution composition in accordance with one aspect of the present disclosure contains more than or equal to 10 mass% and less than or equal to 30 mass% of tungstate ions, more than or equal to 0.05 mass% and less than or equal to 5 mass% of transition metal ions, relative to 1 kg of water, and a remainder of counter anions and water. The transition metal ions include cobalt ions. The counter anions include organic acid ions. The organic acid ions are multidentate ligands.

In PTL 1, a tungsten carbide (WC) powder in which a transition metal is forcibly dissolved is manufactured as described below. First, a mixed aqueous solution containing polytungstate ions ($[H_2W_{12}O_{42}]^{10-}$) and transition metal ions is prepared. The mixed aqueous solution is dried to prepare a dry solid matter. The dry solid matter is heated to a high temperature to produce an oxide powder. The oxide powder is once reduced to a metal powder. The metal powder is carbonized. Through the above procedure, the WC powder serving as the raw material for the cemented carbide is manufactured.

In PTL 1, ammonium paratungstate (APT) is used as a raw material for the mixed aqueous solution. APT has a low solubility in water. Thus, the concentration of the polytungstate ions in the mixed aqueous solution remains at about 5 mass% at most. When the concentration of the polytungstate ions increases in the mixed aqueous solution, ammonium tungstate deposits. Therefore, the polytungstate ions and the transition metal ions cannot be mixed uniformly.

The aqueous solution composition in [1] described above is one of intermediates of a cemented carbide. The organic acid ions contained in the aqueous solution composition are multidentate ligands. The organic acid ions suppress deposition of a solid matter containing tungsten due to the chelate effect. Accordingly, the aqueous solution composition can contain the tungstate ions ($WO_4^{2-}$) at a high concentration of more than or equal to 10 mass% and less than or equal to 30 mass% relative to 1 kg of water, and can further contain more than or equal to 0.05 mass% and less than or equal to 5 mass% of the transition metal ions relative to 1 kg of water. The transition metal ions include at least cobalt (Co) ions. Co can form a solid solution having a high hardness, together with W and carbon (C).

While the aqueous solution composition in [1] described above is a thick solution, it can be an aqueous solution which is stable to such an extent that no precipitate is formed even when it is allowed to stand for several days, for example. Accordingly, in the aqueous solution composition, the tungstate ions and the transition metal ions can be mixed uniformly at the level of ions. Thereby, solid solution particles having a uniform composition can be formed in the present disclosure. Due to solid solution strengthening of a transition metal (such as Co), the solid solution particles can have a hardness higher than that of ordinary WC particles.

Further, since the aqueous solution composition in [1] described above is a thick solution, it can be easily dried. An oxide powder can be produced directly from the aqueous solution composition by a spray pyrolysis technique described later, for example. Thereby, for example, a decrease in drying cost is expected.

In contrast, for example, a thin aqueous solution in PTL 1 has to be oxidized after being evaporated to dryness. This method requires a long heating time, and the temperature is also likely to become high. Accordingly, grain growth of oxide particles is likely to proceed. With the aqueous solution composition in [1] described above, microparticulation of the oxide powder, and thus miniaturization of constituent particles in the cemented carbide are expected.

[2] In the aqueous solution composition, the transition metal ions may further include at least one selected from the group consisting of vanadium (V) ions, chromium (Cr) ions, zirconium (Zr) ions, niobium (Nb) ions, tantalum (Ta) ions, hafnium (Hf) ions, and manganese (Mn) ions.

In the present disclosure, the transition metal ions can be mixed with the tungstate ions in the stage of an aqueous solution. Thereby, formation of a solid solution in which a transition metal such as vanadium (V) is uniformly distributed and dissolved is expected. In the solid solution in which a transition metal such as V is dissolved, suppression of grain growth (that is, improvement in hardness), improvement in heat conductivity, improvement in wear resistance, and the like are expected.

In a cemented carbide manufactured by a conventional powder metallurgy process, a transition metal such as V is formed as a carbide powder (for example, a VC powder), and is added to a WC powder. Thus, heat treatment at a high temperature of more than or equal to 2000°C, for example, is required to dissolve the transition metal in WC. In such high-temperature heat treatment, grain growth is likely to proceed. Accordingly, it is difficult to miniaturize constituent particles in the cemented carbide. In the aqueous solution composition in [2] described above, the transition metal can be uniformly mixed with W in the state of an aqueous solution. Accordingly, the transition metal can be dissolved in WC at a temperature lower than ever before. Therefore, the constituent particles can be microparticulated in the cemented carbide.

[3] In the aqueous solution composition, a ratio of the tungstate ions to a total of the tungstate ions and the transition metal ions may be more than or equal to 60 mol% and less than 100 mol%. Thereby, production of a solid solution having a high hardness is expected. In the following, the ratio of the tungstate ions to the total of the tungstate ions and the transition metal ions will also be referred to simply as a "molar ratio".

[4] In the aqueous solution composition, the organic acid ions may include at least one selected from the group consisting of hydroxy acid ions, amino acid ions, and polycarboxylic acid ions. Thereby, suppression of formation of a precipitate is expected.

[5] In the aqueous solution composition, the organic acid ions may include at least one selected from the group consisting of citrate ions, gluconate ions, malate ions, alanine ions, arginine ions, aspartate ions, oxalate ions, succinate ions, maleate ions, and ethylenediaminetetraacetate ions. Thereby, suppression of formation of a precipitate is expected.

[6] An oxide powder in accordance with one aspect of the present disclosure includes oxide particles having an average particle size of less than or equal to 2 $\mu$m. The oxide particles are porous and spherical. The oxide particles include a composite oxide. The composite oxide contains a transition metal, tungsten, and oxygen. The transition metal includes cobalt.

The oxide powder in [6] described above is one of the intermediates of the cemented carbide. This oxide powder is typically produced by spray-drying the aqueous solution composition in [1] to [5] described above.

As described above, the aqueous solution composition in [1] to [5] described above is a thick solution. Further, in the aqueous solution composition, the tungstate ions and the transition metal ions are mixed uniformly. When this aqueous solution composition is spray-dried, the composite oxide (such as $CoWO_4$, for example) is produced quickly as an ordered phase. In $CoWO_4$, W and Co are uniformly distributed and dissolved.

In contrast, for example in the thin aqueous solution disclosed in PTL 1, it takes a long time to dry and oxidize, that is, heat, the aqueous solution. Thus, phase separation may occur in a composite oxide of W and Co. For example, not only $CoWO_4$ or the like which is an ordered phase but also $WO_3$ or the like which is a disordered phase may be produced. Co may not be dissolved in $WO_3$. Therefore, when $WO_3$ in which Co is not dissolved is produced, the cemented carbide contains WC particles (a non-solid solution). That is, the hardness of the cemented carbide may be decreased.

In the oxide powder in [6] described above, the oxide particles have an average particle size of less than or equal to 2 $\mu$m. The oxide particles are porous and spherical. That is, the oxide particles have a fine structure. Typically, each oxide particle is formed by agglomerating primary particles having a size of 100 nm. Particles having such particle size and form are likely to be produced by spray-drying the aqueous solution composition in [1] to [5] described above.

In contrast, for example, in order to produce an oxide powder from the thin aqueous solution in PTL 1, heating at a high temperature is required, and it takes a long time to increase the temperature. Thereby, grain growth of oxide particles is likely to proceed. In addition, it is difficult to produce porous and spherical particles by a drying method other than spray-drying.

In the present disclosure, carbide particles are produced by carbonizing the oxide particles in [6] described above. The oxide particles are porous and spherical. Thus, carbonization proceeds quickly. Further, carbonization proceeds uniformly in the particles. The produced carbide particles can have a uniform composition, and can become fine particles. By sintering a carbide powder including the carbide particles, a cemented carbide comprising fine solid solution particles can be manufactured.

The "average particle size of the oxide particles" is measured by a linear intercept method. For the measurement, a TEM (Transmission Electron Microscope) is used. Using the TEM, an image including 50 or more oxide particles is prepared. The magnification of the TEM image is set to about 20000 times. In the TEM image, 10 arbitrary straight lines are set. The length of each straight line is set to 3 $\mu$m. The number of oxide particles intersecting one straight line is counted. The total length occupied by the oxide particles in the straight line is measured. The total length is divided by the number of the oxide particles. Thereby, a particle size is calculated. An arithmetic mean value of the particle sizes calculated from the respective straight lines is adopted as the average particle size of the oxide particles.

The description "the oxide particles are porous" means that each oxide particle has two or more open pores. Whether each oxide particle has two or more open pores is confirmed by TEM observation.

The description "the oxide particles are spherical" means that a two-dimensional projection image of each oxide particle has a circularity of more than or equal to 0.9 and less than or equal to 1.0. The circularity is calculated by the following equation:

$$C = 4\pi S/L^2$$

where "C" indicates the circularity, "S" indicates the area of the two-dimensional projection image of each particle, and "L" indicates the peripheral length of the two-dimensional projection image.

In the case of a powder, when an average circularity, that is, an arithmetic mean value of circularities of a plurality of oxide particles, is more than or equal to 0.9 and less than or equal to 1.0, all of the particles included in the powder are considered as spherical. The average circularity is calculated from measurement results of the 50 or more oxide particles. To measure the circularity, a commercially available image analyzer for particle size distribution is used.

[7] In the oxide powder, the transition metal may further include at least one selected from the group consisting of vanadium, chromium, zirconium, niobium, tantalum, hafnium, and manganese. Thereby, suppression of grain growth (that is, improvement in hardness), improvement in heat conductivity, improvement in wear resistance, and the like are expected in the cemented carbide.

[8] A carbide powder in accordance with one aspect of the present disclosure includes carbide particles having an average particle size of less than or equal to 10 nm. The carbide particles include a composite carbide. The composite carbide contains a transition metal, tungsten, and carbon. The transition metal includes cobalt.

The carbide powder in [8] described above is one of the intermediates of the cemented carbide. The carbide powder is typically produced by carbonizing the oxide powder in [6] or [7] described above. The carbide particles include a composite carbide. In the composite carbide, the transition metal (such as Co), W, and C are uniformly dissolved in each other. Further, the transition metal is uniformly distributed in the carbide particles.

The cemented carbide is formed by sintering the carbide powder. The carbide particles have an average particle size of less than or equal to 10 nm. Thus, the cemented carbide comprises fine solid solution particles. Since the constituent particles are fine particles, the cemented carbide can have a high hardness.

[9] In the carbide powder, the transition metal may further include at least one selected from the group consisting of vanadium, chromium, zirconium, niobium, tantalum, hafnium, and manganese. Thereby, suppression of grain growth, improvement in heat conductivity, improvement in wear resistance, and the like are expected in the cemented carbide.

[10] In the carbide powder, the composite carbide may contain more than or equal to 0.1 mass% and less than or equal to 20 mass% of the transition metal, and a remainder of the tungsten and the carbon. Thereby, improvement in hardness is expected in the cemented carbide.

[11] A cemented carbide in accordance with one aspect of the present disclosure includes solid solution particles having an average particle size of less than or equal to 50 nm. The solid solution particles contain a transition metal, tungsten, and carbon. The transition metal includes cobalt.

The cemented carbide in [11] described above is typically produced by sintering the carbide powder in [8] to [10] described above. As described above, the carbide particles included in the carbide powder have an average particle size of less than or equal to 10 nm. Thus, the solid solution particles included in the cemented carbide can also become fine particles having an average particle size of less than or equal to 50 nm. Since the constituent particles are fine particles, the cemented carbide can have a high hardness.

The cemented carbide comprises the solid solution particles. Due to solid solution strengthening of the transition metal, the solid solution particles have a hardness higher than that of the WC particles (non-solid solution). Thus, the cemented carbide can have a higher hardness.

The cemented carbide in [11] described above can be used for cutting tools such as a drill, for example. A cutting tool including the cemented carbide in [11] described above is suitable for microfabrication, for example, because of the fine constituent particles.

[12] In the cemented carbide, the transition metal may further include at least one selected from the group consisting of vanadium, chromium, zirconium, niobium, tantalum, hafnium, and manganese. Thereby, suppression of grain growth, that is, miniaturization of the constituent particles, is expected.

[13] The solid solution particles may contain more than or equal to 0.1 mass% and less than or equal to 20 mass% of the transition metal, and a remainder of the tungsten and the carbon. Thereby, improvement in hardness is expected.

[14] The cemented carbide may further include a binder phase in addition to the solid solution particles. The binder phase may contain cobalt which is not dissolved in the solid solution particles. By the presence of such a binder phase, for example, densification of the cemented carbide is expected.

[15] A cemented carbide in accordance with one aspect of the present disclosure includes solid solution particles having an average particle size of less than or equal to 50 nm, and a binder phase. The solid solution particles contain more than or equal to 0.1 mass% and less than or equal to 20 mass% of a transition metal, and a remainder of tungsten and carbon. The transition metal includes cobalt. The transition metal further includes at least one selected from the group consisting of vanadium, chromium, zirconium, niobium, tantalum, hafnium, and manganese. The binder phase contains cobalt which is not dissolved in the solid solution particles. The cemented carbide can have a high hardness.

The "average particle size of the solid solution particles in the cemented carbide" and the "average particle size of the carbide particles in the carbide powder" are calculated by substituting an XRD (X-Ray Diffraction) result of the cemented carbide or the carbide powder into Scherrer equation:

$$D = (0.94\lambda)/(\beta\cos\theta)$$

where "D" indicates an average particle size, "$\lambda$" indicates an X-ray wavelength, "$\beta$" indicates a full width at half maximum of a peak (unit: rad), and "$\theta$" indicates a black angle. It has been confirmed that, in each of the cemented carbide and the carbide powder of the present disclosure, the average particle size calculated from Scherrer equation agrees well with the result of TEM observation.

As an XRD device, for example, "Ultima IV" manufactured by Rigaku Corporation, or an equivalent thereto is used. A (101) diffraction line of WC is measured. The full width at half maximum of peak "$\beta$" and black angle "$\theta$" of the (101) diffraction line of WC are substituted into Scherrer equation. XRD conditions are as follows.

X ray: Cu-K$\alpha$ ray
Tube output: 40 kV, 40 mA
Scanning range: $2\theta = 20°$ to 70°
Scanning step: 0.02°

The "compositions of the cemented carbide and the carbide powder (mass% of components)" are specified by Inductively Coupled Plasma Atomic Emission Spectroscopy (ICP-AES). For analysis, for example, an ICP emission spectroscopy device "ICPS-8100" manufactured by Shimadzu Corporation, or an equivalent thereto is used. The measurement procedure is as described below.

A powder sample is extracted from the cemented carbide or the carbide powder. The powder sample is pulverized as appropriate. To pulverize the powder sample, agate mortar and pestle are used, for example. 0.1 g of the powder sample is dissolved in 20 ml of hydrogen peroxide water. Thereby, a liquid sample for ICP is prepared.

The liquid sample for ICP is introduced into the ICP emission spectroscopy device. Argon (Ar) gas plasma is used to excite a metallic element. Light is emitted from the excited metallic element. The emitted light is dispersed. The metallic element is quantified based on emission intensity.

The "composition of the aqueous solution composition" is measured as described below. The aqueous solution composition is diluted by 100 times with ion exchange water. Thereby, a liquid sample for ICP is prepared. The liquid sample is introduced into the ICP emission spectroscopy device.

[16] A method for manufacturing an aqueous solution composition in accordance with one aspect of the present disclosure includes:

(a1) preparing a first aqueous solution by dissolving a tungsten oxide in ammonia water;
(a2) preparing a second aqueous solution by dissolving an organic acid in the first aqueous solution;
(a3) preparing a dry solid matter by drying the second aqueous solution at a temperature lower than a decomposition temperature of the organic acid;
(a4) preparing a third aqueous solution by dissolving the dry solid matter in water; and
(a5) manufacturing an aqueous solution composition by mixing an acid aqueous solution containing at least a cobalt salt into the third aqueous solution.

In the manufacturing method in [16] described above, the aqueous solution composition in [1] to [5] described above can be manufactured. The aqueous solution composition can serve as an intermediate of the cemented carbide. In (a1), since APT is not used as a raw material, the first aqueous solution containing tungstate ions at a high concentration of more than or equal to 10 mass% and less than or equal to 30 mass% can be prepared. In (a2), the second aqueous solution containing the organic acid is prepared. In (a3), the second aqueous solution is dried. That is, the second aqueous solution is evaporated to dryness. Drying is performed at a temperature at which the organic acid is not decomposed. By this drying operation, an ammonia component is decreased. The ammonia component is a cause that the aqueous solution composition exhibits basicity.

In (a4), the obtained dry solid matter is formed as an aqueous solution again. Thereby, the third aqueous solution is prepared. The third aqueous solution also contains tungstate ions at a high concentration. Since decomposition of the organic acid is suppressed and the ammonia component is decreased, the third aqueous solution becomes an acid aqueous solution. Accordingly, in (a5), the third aqueous solution can be mixed with the acid aqueous solution containing a cobalt salt and the like. When an aqueous solution containing tungstate ions is basic, it is difficult to mix the aqueous solution with the acid aqueous solution containing a cobalt salt and the like.

[17] In the method for manufacturing the aqueous solution composition, the acid aqueous solution may further contain at least one selected from the group consisting of a vanadium salt, a chromium salt, a zirconium salt, a niobium salt, a tantalum salt, a hafnium salt, and a manganese salt. Thereby, miniaturization of constituent particles and improvement in hardness are expected in a cemented carbide manufactured from the aqueous solution composition.

[18] A method for manufacturing an oxide powder in accordance with one aspect of the present disclosure includes:

(a1) preparing a first aqueous solution by dissolving a tungsten oxide in ammonia water;
(a2) preparing a second aqueous solution by dissolving an organic acid in the first aqueous solution;
(a3) preparing a dry solid matter by drying the second aqueous solution at a temperature lower than a decomposition temperature of the organic acid;
(a4) preparing a third aqueous solution by dissolving the dry solid matter in water;
(a5) manufacturing an aqueous solution composition by mixing an acid aqueous solution containing at least a cobalt salt into the third aqueous solution; and
(b) manufacturing an oxide powder by spray-drying the aqueous solution composition at a temperature of more than or equal to 500°C and less than or equal to 1500°C by a spray pyrolysis technique.

In the manufacturing method in [18] described above, the oxide powder in [6] or [7] described above can be manufactured. First, through (a1) to (a5), the aqueous solution composition is manufactured. Then, in (b), the oxide powder is manufactured. In (b), the spray pyrolysis technique is adopted as a method of drying and oxidizing the aqueous solution composition. By adopting the spray pyrolysis technique, the composition, particle size, fine structure, and shape of the oxide particles can be controlled.

In the spray pyrolysis technique, the molar ratio between the tungstate ions and the transition metal ions in the aqueous solution composition is likely to be reflected in a produced oxide. That is, the composition of the oxide particles can be easily controlled.

In the spray pyrolysis technique, drying and oxidation are completed in a short time. That is, the time for which a raw material is exposed to heat is short. Thereby, grain growth of the oxide particles is suppressed. By the suppression of grain growth, the oxide particles become fine particles. The oxide particles can have an average particle size of less than or equal to 2 $\mu$m. As a result, the oxide particles can become monodisperse particles.

As described above, in PTL 1, the oxide powder is produced by evaporating the thin aqueous solution to dryness and heating the dry solid matter. Thus, the time for which a raw material is exposed to heat is long, and grain growth is likely to proceed. As grain growth proceeds, the oxide particles become coarse particles. As a result, the oxide particles become polydisperse particles.

In the spray pyrolysis technique, production of $WO_3$ (non-solid solution) is suppressed by heating an atomized aqueous solution composition to more than or equal to 500°C in a short time. Thereby, a composite oxide having a uniform composition is produced. The atomized aqueous solution composition can be oxidized at a temperature of less than or equal to 1500°C, and thereafter cooled to around room temperature in a short time. Thereby, grain growth of the oxide particles is suppressed.

In the spray pyrolysis technique, the length of a reaction portion (tubular furnace) can be adjusted. Thereby, the form of the oxide particles can be controlled to be porous and spherical.

[19] A method for manufacturing a carbide powder in accordance with one aspect of the present disclosure includes:

(a1) preparing a first aqueous solution by dissolving a tungsten oxide in ammonia water;
(a2) preparing a second aqueous solution by dissolving an organic acid in the first aqueous solution;
(a3) preparing a dry solid matter by drying the second aqueous solution at a temperature lower than a decomposition temperature of the organic acid;

(a4) preparing a third aqueous solution by dissolving the dry solid matter in water;

(a5) manufacturing an aqueous solution composition by mixing an acid aqueous solution containing at least a cobalt salt into the third aqueous solution;

(b) manufacturing an oxide powder by spray-drying the aqueous solution composition at a temperature of more than or equal to 500°C and less than or equal to 1500°C by a spray pyrolysis technique; and

(c) manufacturing a carbide powder by heating the oxide powder in an inert atmosphere in co-presence of an organic nitrogen compound containing at least one of a cyano group and an amino group.

In the manufacturing method in [19] described above, the carbide powder in [8] to [10] described above can be manufactured. First, through (a1) to (a5) and (b), the oxide powder is manufactured. Then, in (c), the carbide powder is manufactured. In (c), the oxide powder is heated in the inert atmosphere, in the co-presence of the organic nitrogen compound containing at least one of the cyano group and the amino group.

By heating the oxide powder in the co-presence of the organic nitrogen compound, the oxide particles are carbonized and become carbide particles. By heating the oxide powder in the co-presence of the organic nitrogen compound, a carbonization reaction proceeds at a relatively low temperature. Thereby, fine carbide particles are produced. The carbide particles can have an average particle size of less than or equal to 10 nm.

The oxide particles are porous and spherical. In addition, the oxide particles can be monodisperse particles. Accordingly, carbonization proceeds quickly. Thereby, grain growth of the carbide particles is suppressed. Further, carbonization proceeds uniformly. Thereby, carbide particles having a uniform composition are formed.

In contrast, for example in PTL 1, the oxide powder is once reduced to a metal powder, and the metal powder is carbonized. Tungsten and the transition metal have carbonization rates different from each other. Accordingly, carbide particles have variations in composition and particle size. In addition, by the time carbonization of all metals is completed, grain growth of the carbide particles will proceed to a considerable extent. Accordingly, in the cemented carbide which is a final product, solid solution particles will grow to have a particle size of more than or equal to 500 nm.

[20] In the method for manufacturing the carbide powder, the organic nitrogen compound may be at least one selected from the group consisting of urea, polyacrylonitrile, a melamine resin, and acetonitrile. Thereby, promotion of carbonization of the oxide particles is expected.

[21] A method for manufacturing a cemented carbide in accordance with one aspect of the present disclosure includes:

(a1) preparing a first aqueous solution by dissolving a tungsten oxide in ammonia water;

(a2) preparing a second aqueous solution by dissolving an organic acid in the first aqueous solution;

(a3) preparing a dry solid matter by drying the second aqueous solution at a temperature lower than a decomposition temperature of the organic acid;

(a4) preparing a third aqueous solution by dissolving the dry solid matter in water;

(a5) manufacturing an aqueous solution composition by mixing an acid aqueous solution containing at least a cobalt salt into the third aqueous solution;

(b) manufacturing an oxide powder by spray-drying the aqueous solution composition at a temperature of more than or equal to 500°C and less than or equal to 1500°C by a spray pyrolysis technique;

(c) manufacturing a carbide powder by heating the oxide powder in an inert atmosphere in co-presence of an organic nitrogen compound containing at least one of a cyano group and an amino group; and

(d) manufacturing a cemented carbide by sintering the carbide powder.

In the manufacturing method in [21] described above, the cemented carbide in [11] to [15] described above can be manufactured. First, through (a1) to (a5), (b), and (c), the carbide powder is manufactured. Then, in (d), the carbide powder is sintered, and thereby the cemented carbide is manufactured. Since the carbide particles included in the carbide powder are fine particles, the constituent particles (solid solution particles) included in the cemented carbide can also become fine particles.

[Effect of the Present Disclosure]

According to the above description, a cemented carbide having a high hardness is provided.

[Details of Embodiment of the Present Disclosure]

The embodiment of the present disclosure (hereinafter referred to as the "present embodiment") will be described below. However, the following description does not limit the invention of the present disclosure.

<Aqueous Solution Composition>

The aqueous solution composition of the present embodiment is one of the intermediates of the cemented carbide. The aqueous solution composition of the present embodiment is a thick aqueous solution. The aqueous solution composition contains more than or equal to 10 mass% and less than or equal to 30 mass% of tungstate ions relative to 1 kg of water, more than or equal to 0.05 mass% and less than or equal to 5 mass% of transition metal ions relative to 1 kg of water, and a remainder of counter anions and water.

<<Tungstate Ions>>

The aqueous solution composition contains more than or equal to 10 mass% of tungstate ions ($WO_4^{2-}$) relative to 1 kg of water. Thereby, the oxide powder manufactured from the aqueous solution composition is microparticulated. The aqueous solution composition contains less than or equal to 30 mass% of tungstate ions relative to 1 kg of water. When the tungstate ions exceed 30 mass%, a solid matter containing tungsten may deposit. When the solid matter containing tungsten deposits, it is difficult to produce an oxide powder having a uniform composition.
The aqueous solution composition may contain more than or equal to 15 mass% and less than or equal to 30 mass% of tungstate ions, may contain more than or equal to 20 mass% and less than or equal to 30 mass% of tungstate ions, or may contain more than or equal to 20 mass% and less than or equal to 25 mass% of tungstate ions, relative to 1 kg of water. Thereby, microparticulation and uniformity in composition of the oxide powder are expected.

<<Transition Metal Ions>>

The transition metal ions include at least Co ions. Co can form a solid solution having a high hardness, together with W and C. In addition to Co ions, the transition metal ions may further include at least one selected from the group consisting of V ions, Cr ions, Zr ions, Nb ions, Ta ions, Hf ions, and Mn ions. Thereby, suppression of grain growth is expected. In addition, improvement in heat conductivity, improvement in wear resistance, and the like are also expected in the cemented carbide.
When the aqueous solution composition contains two or more types of transition metal ions (except for tungsten ions), the mass% of the transition metal ions shall indicate the total mass% of all of the transition metal ions. The aqueous solution composition contains more than or equal to 0.05 mass% of transition metal ions relative to 1 kg of water. Thereby, a solid solution having a high hardness is formed. The aqueous solution composition contains less than or equal to 5 mass% of transition metal ions relative to 1 kg of water. When the transition metal ions exceed 5 mass%, a transition metal salt may deposit. When the transition metal salt deposits, it is difficult to produce an oxide powder having a uniform composition.
The aqueous solution composition may contain more than or equal to 0.1 mass% and less than or equal to 5 mass% of transition metal ions, may contain more than or equal to 0.5 mass% and less than or equal to 5 mass% of transition metal ions, may contain more than or equal to 1 mass% and less than or equal to 5 mass% of transition metal ions, may contain more than or equal to 1 mass% and less than or equal to 4 mass% of transition metal ions, or may contain more than or equal to 1 mass% and less than or equal to 3 mass% of transition metal ions, relative to 1 kg of water. Thereby, uniformity in the composition of the oxide powder and improvement in the hardness of the cemented carbide are expected.

(Molar Ratio)

In the aqueous solution composition, the ratio of the tungstate ions to the total of the tungstate ions and the transition metal ions (that is, the molar ratio) may be more than or equal to 60 mol% and less than 100 mol%. Thereby, formation of a solid solution having a high hardness is expected. The molar ratio may be more than or equal to 60 mol% and less than or equal to 99 mol%, may be more than or equal to 70 mol% and less than or equal to 99 mol%, may be more than or equal to 80 mol% and less than or equal to 95 mol%, or may be more than or equal to 85 mol% and less than or equal to 95 mol%.
In the aqueous solution composition of the present embodiment, tungsten is stable as tungstate ions ($WO_4^{2-}$). In the aqueous solution composition of the present embodiment, tungsten ions ($W^{n+}$) hardly exist. Therefore, the substance quantity of tungsten quantified by the ICP emission spectroscopy described above can be regarded as the substance quantity of tungstate ions ($WO_4^{2-}$). The substance quantity of the transition metal ions is also quantified by the ICP emission spectroscopy described above. The molar ratio is calculated by dividing the substance quantity of tungsten by the substance quantity of the transition metal ions.

<<Counter Anions>>

A counter anion is an anion which is paired with a cation (a tungstate ion or a transition metal ion) in the aqueous solution composition. The counter anions include organic acid ions. The organic acid ions are multidentate ligands. Thereby, deposition and precipitation of the solid matter containing tungsten and the transition metal salt are suppressed.

The organic acid ions may include at least one selected from the group consisting of hydroxy acid ions, amino acid ions, and polycarboxylic acid ions. These organic acid ions have multidentate ligands. Accordingly, it is considered that these organic acid ions have a significant effect of suppressing formation of a precipitate.

The organic acid ions may be anions having a high chelating ability. Further, for convenience of manufacturing of the aqueous solution composition, the organic acid ions may be ions of an organic acid having a decomposition temperature of more than or equal to 100°C. More specifically, the organic acid ions may be at least one selected from: hydroxy acid ions, such as citrate ions, gluconate ions, and malate ions; amino acid ions, such as alanine ions, arginine ions, and aspartate ions; polycarboxylic acid ions, such as oxalate ions, succinate ions, and maleate ions; and aminopolycarboxylic acid ions, such as ethylenediaminetetraacetate (EDTA) ions.

<<Other Components>>

The aqueous solution composition may also contain components other than the components described above (hereinafter referred to as "other components"), as the remainder. Examples of other components include inorganic acid ions, chloride ions, and the like derived from a transition metal salt. The inorganic acid ions are nitrate ions and the like, for example.

<Oxide Powder>

The oxide powder of the present embodiment is one of the intermediates of the cemented carbide. The oxide powder is typically produced by spray-drying the aqueous solution composition described above.

<<Oxide Particles>>

The oxide powder includes oxide particles. The oxide powder may be a powder including substantially only oxide particles. However, as long as the oxide powder includes oxide particles, the oxide powder may include metallic particles, for example.

(Average Particle Size)

The oxide particles have an average particle size of less than or equal to 2 $\mu$m. The oxide particles may have an average particle size of more than or equal to 0.1 $\mu$m, for example. Since the oxide particles have an average particle size of less than or equal to 2 $\mu$m, the oxide particles are easily carbonized. The oxide particles may have an average particle size of more than or equal to 0.5 $\mu$m and less than or equal to 1.5 $\mu$m.

(Fine Structure and Shape)

The oxide particles are porous and spherical. Each oxide particle is, for example, a secondary particle formed by agglomerating primary particles. An open pore can be formed in a gap between the primary particles. The size of the primary particles may be more than or equal to 1 nm and less than or equal to 200 nm, for example. The oxide particles having forms such as spherical, hollow, and porous forms can be formed by spray-drying the aqueous solution composition.

(Composite Oxide)

The oxide particles include a composite oxide. The "composite oxide" refers to a compound composed of two or more metals and oxygen (O). The oxide particles may be particles including substantially only a composite oxide. However, as long as the oxide particles include a composite oxide, the oxide particles may include a simple metallic oxide composed of one metal and oxygen, or an unoxidized metal, or the like, for example.

The composite oxide contains a transition metal, W, and O. The transition metal includes at least Co. Examples of the composite oxide include a compound expressed by a composition formula of $CoWO_4$. In $CoWO_4$, a portion of Co can be replaced with another transition metal. That is, the composite oxide may further contain at least one selected from the group consisting of V, Cr, Zr, Nb, Ta, Hf, and Mn.

The oxide particles may include two or more transition metal elements. In addition, the oxide particles may further include $MnWO_4$, $CrWO_4$, $ZrWO_4$, or the like, in addition to $CoWO_4$.

<Carbide Powder>

The carbide powder of the present embodiment is one of the intermediates of the cemented carbide. The carbide powder is typically produced by carbonizing the oxide powder described above.

<<Carbide Particles>>

The carbide powder includes carbide particles. The carbide powder may be a powder including substantially only carbide particles. However, as long as the carbide powder includes carbide particles, the carbide powder may include metallic particles, oxide particles, or the like, for example.

(Average Particle Size)

The carbide particles have an average particle size of less than or equal to 10 nm. The carbide particles may have an average particle size of more than or equal to 1 nm, for example. Since the carbide particles have an average particle size of less than or equal to 10 nm, the constituent particles in the cemented carbide can have an average particle size of less than or equal to 50 nm. The carbide particles may have an average particle size of more than or equal to 1 nm and less than or equal to 9 nm, may have an average particle size of more than or equal to 2 nm and less than or equal to 8 nm, may have an average particle size of more than or equal to 3 nm and less than or equal to 7 nm, or may have an average particle size of more than or equal to 4 nm and less than or equal to 6 nm. Thereby, improvement in the hardness of the cemented carbide is expected.

(Composite Carbide)

The carbide particles include a composite carbide. The "composite carbide" refers to a compound composed of two or more metals and carbon (C). The composite carbide of the present embodiment is a precursor of the solid solution particles described later.

The carbide particles may be particles including substantially only a composite carbide. However, as long as the carbide particles include a composite carbide, the carbide particles may include a simple metallic carbide composed of one metal and carbon, an uncarbonized metallic oxide, metal, free carbon, or the like, for example.

The composite carbide contains a transition metal, W, and C. The transition metal includes at least Co. Examples of the composite carbide include a compound (or a solid solution) expressed by a composition formula of $Co_xW_yC$ (where $0<x<2$, $0<y<2$, $0<x+y\leq2$). A portion of Co can be replaced with another transition metal. That is, the composite carbide may further contain at least one selected from the group consisting of V, Cr, Zr, Nb, Ta, Hf, and Mn.

The carbide particles may include two or more transition metal elements. In addition, the carbide particles may further include $Mn_xW_yC$ (where $0<x<2$, $0<y<2$, $0<x+y\leq2$), $Cr_xW_yC$ (where $0<x<2$, $0<y<2$, $0<x+y\leq2$), $Zr_xW_yC$ (where $0<x<2$, $0<y<2$, $0<x+y\leq2$), or the like, in addition to $Co_xW_yC$.

The composite carbide may contain more than or equal to 0.1 mass% and less than or equal to 20 mass% of the transition metal, and a remainder of W and C. Thereby, a solid solution having a high hardness can be formed. When the composite carbide contains two or more transition metals (except for W), the mass% of the transition metal shall indicate the total mass% of all of the transition metals.

The composite carbide may contain more than or equal to 0.5 mass% and less than or equal to 20 mass% of the transition metal, may contain more than or equal to 1 mass% and less than or equal to 20 mass% of the transition metal, or may contain more than or equal to 5 mass% and less than or equal to 15 mass% of the transition metal. Thereby, improvement in the hardness of the solid solution is expected.

The composite carbide may contain: more than or equal to 0.1 mass% and less than or equal to 20 mass% of Co; more than or equal to 0.1 mass% and less than or equal to 1 mass% of a transition metal (at least one selected from the group consisting of V, Cr, Zr, Nb, Ta, Hf, and Mn); and a remainder of W and C. Thereby, suppression of grain growth is expected.

<Cemented Carbide>

The cemented carbide of the present embodiment includes fine constituent particles. The cemented carbide is typically produced by sintering the oxide powder described above. The cemented carbide of the present embodiment has a high hardness. The cemented carbide can be used, for example, for cutting tools (such as a drill) for microfabrication.

<<Solid Solution Particles>>

The cemented carbide includes solid solution particles. The solid solution particles are constituent particles of the cemented carbide. The cemented carbide may be a sintered body including substantially only solid solution particles. However, as long as the cemented carbide includes solid solution particles, the cemented carbide may further include a binder phase and the like. Furthermore, the cemented carbide may also include free carbon, η phase, or the like, for example, in addition to the solid solution particles and the binder phase.

(Average Particle Size)

The solid solution particles have an average particle size of less than or equal to 50 nm. The solid solution particles may have an average particle size of more than or equal to 5 nm, for example. Since the solid solution particles have an average particle size of less than or equal to 50 nm, the cemented carbide can have a high hardness. The solid solution particles may have an average particle size of more than or equal to 10 nm and less than or equal to 50 nm, may have an average particle size of more than or equal to 10 nm and less than or equal to 45 nm, may have an average particle size of more than or equal to 15 nm and less than or equal to 40 nm, may have an average particle size of more than or equal to 20 nm and less than or equal to 35 nm, may have an average particle size of more than or equal to 20 nm and less than or equal to 30 nm, or may have an average particle size of more than or equal to 20 nm and less than or equal to 25 nm.

(Composition)

The solid solution particles contain a transition metal, W, and C. The transition metal, W, and C form a solid solution. For example, the transition metal is dissolved in WC. The transition metal includes at least Co. Co is uniformly distributed in the solid solution particles. Due to solid solution strengthening, the solid solution particles can have a hardness higher than that of ordinary WC particles. The solid solution particles may further contain at least one transition metal selected from the group consisting of V, Cr, Zr, Nb, Ta, Hf, and Mn, in addition to Co. These transition metals are expected to achieve suppression of grain growth, improvement in heat conductivity, improvement in wear resistance, and the like.

The composition of the carbide particles can be reflected in the solid solution particles. That is, the solid solution particles can contain more than or equal to 0.1 mass% and less than or equal to 20 mass% of the transition metal, and a remainder of W and C. Thereby, a solid solution having a high hardness can be formed. When the solid solution particles contain two or more transition metals (except for W), the mass% of the transition metal shall indicate the total mass% of all of the transition metals.

The solid solution particles may contain more than or equal to 0.5 mass% and less than or equal to 20 mass% of the transition metal, may contain more than or equal to 1 mass% and less than or equal to 20 mass% of the transition metal, or may contain more than or equal to 5 mass% and less than or equal to 15 mass% of the transition metal. Thereby, improvement in hardness is expected.

The solid solution particles may contain: more than or equal to 0.1 mass% and less than or equal to 20 mass% of Co; more than or equal to 0.1 mass% and less than or equal to 1 mass% of a transition metal (at least one selected from the group consisting of V, Cr, Zr, Nb, Ta, Hf, and Mn); and a remainder of W and C. Thereby, the solid solution particles become finer, and improvement in hardness is expected.

<<Binder Phase>>

The cemented carbide may further include a binder phase in addition to the solid solution particles. The cemented carbide may include, for example, more than or equal to 90 mass% and less than or equal to 99 mass% of the solid solution particles, and a remainder of the binder phase. The binder phase contains, for example, Co which is not dissolved in the solid solution particles. By the presence of the binder phase, for example, densification of the cemented carbide is expected. The binder phase may contain, for example, V, Cr, Zr, Nb, Ta, Hf, Mn, nickel (Ni), titanium (Ti), iron (Fe), or the like, in addition to Co.

<<Vickers Hardness>>

The hardness of the cemented carbide is evaluated by Vickers hardness, for example. The cemented carbide of the present embodiment can have a Vickers hardness of more than or equal to 2000 HV0.1. The cemented carbide may have a Vickers hardness of more than or equal to 2500 HV0.1, may have a Vickers hardness of more than or equal to 2800 HV0.1, may have a Vickers hardness of more than or equal to 3000 HV0.1, or may have a Vickers hardness of more than or equal to 3200 HV0.1. For example, the cemented carbide may have a Vickers hardness of more than or equal to 4000 HV0.1.

In the unit "HV0.1" of the Vickers hardness, "0.1" indicates a test force when measuring the hardness. The "Vickers hardness of the cemented carbide" is measured with a micro Vickers hardness meter, for example. As the micro Vickers hardness meter, for example, "HMV-G21" manufactured by Shimadzu Corporation, or an equivalent thereto is used. The test force is set to 100 gf (0.1 kgf). The pressing time of an indenter is set to 5 seconds. An indentation is formed by pressing the indenter. The surface area of the indentation is measured. The test force is divided by the surface area of the indentation. Thereby, the Vickers hardness is calculated. The Vickers hardness is measured five times or more. An arithmetic mean value of five or more results is adopted as the Vickers hardness.

<Method for Manufacturing Aqueous Solution Composition, Oxide Powder, Carbide Powder, and Cemented Carbide>

In the following, a method for manufacturing an aqueous solution composition, an oxide powder, a carbide powder, and a cemented carbide in accordance with the present embodiment will be described. Fig. 1 is a flowchart schematically showing the method for manufacturing the aqueous solution composition, the oxide powder, the carbide powder, and the cemented carbide in accordance with the present embodiment.

The manufacturing method of the present embodiment includes dissolution of a tungsten oxide (101), addition of an organic acid (102), drying (103), re-dissolution (104), and addition of a transition metal salt (105). Thereby, the aqueous solution composition is manufactured. That is, dissolution of a tungsten oxide (101) to addition of a transition metal salt (105) constitute a "method for manufacturing the aqueous solution composition".

The manufacturing method of the present embodiment includes spray-drying (200). Thereby, the oxide powder is manufactured. That is, dissolution of a tungsten oxide (101) to spray-drying (200) constitute a "method for manufacturing the oxide powder".

The manufacturing method of the present embodiment includes carbonization (300). Thereby, the carbide powder is manufactured. That is, dissolution of a tungsten oxide (101) to carbonization (300) constitute a "method for manufacturing the carbide powder".

The manufacturing method of the present embodiment includes sintering (400). Thereby, the cemented carbide is manufactured. That is, dissolution of a tungsten oxide (101) to sintering (400) constitute a "method for manufacturing the cemented carbide".

In the following, the manufacturing method of the present embodiment will be described in order.

<<Dissolution of Tungsten Oxide (101)>>

The manufacturing method of the present embodiment includes preparing a first aqueous solution by dissolving a tungsten oxide in ammonia water.

The ammonia water may be commercially available ammonia water. The ammonia water may have a concentration of more than or equal to 1 mass% and less than or equal to 20 mass%, for example. The tungsten oxide may be $WO_3$, or may be $WO_2$, for example. Here, for example, more than or equal to 100 g and less than or equal to 300 g of $WO_3$ is dissolved in 1 L of ammonia water. Dissolution operation is performed at room temperature, for example.

<<Addition of Organic Acid (102)>>

The manufacturing method of the present embodiment includes preparing a second aqueous solution by dissolving an organic acid in the first aqueous solution.

(Organic Acid)

Here, an organic acid having a multidentate ligand is used. The organic acid may be an anhydride, or may be a hydrate. Considering that the second aqueous solution is later evaporated to dryness, it is convenient if the organic acid has a decomposition temperature of more than or equal to 100°C. The organic acid may be at least one selected from the group consisting of hydroxy acids, amino acids, and polycarboxylic acids. More specifically, the organic acid may be at least one selected from the group consisting of: hydroxy acids, such as citric acid, gluconic acid, and malic acid; amino acids, such as alanine, arginine, and aspartic acid; polycarboxylic acids, such as oxalic acid, succinic acid, and maleic acid; and aminopolycarboxylic acids, such as EDTA. Dissolution operation is performed at room temperature, for example.

<<Drying (103)>>

The manufacturing method of the present embodiment includes preparing a dry solid matter by drying the second aqueous solution at a temperature lower than a decomposition temperature of the organic acid.

For drying operation, a common constant-temperature dryer is used. The drying temperature is set to a temperature lower than the decomposition temperature of the organic acid. For example, when the organic acid is citric acid (decomposition temperature: 175°C), the drying temperature is set to a temperature lower than 175°C by 10 to 30°C. The drying operation is performed such that substantially all the moisture in the second aqueous solution may evaporate. The drying time may be set to 24 to 48 hours, for example. The dry solid matter is produced by evaporating substantially all the moisture in the second aqueous solution. In the dry solid matter, the ammonia component is decreased. The ammonia component is a cause that the aqueous solution composition exhibits basicity. In the present embodiment, the ammonia component can be substantially removed.

<<Re-dissolution (104)>>

The manufacturing method of the present embodiment includes preparing a third aqueous solution by dissolving the dry solid matter in water.

Re-dissolution operation is performed at room temperature, for example. The water is ion exchange water, for example. In the third aqueous solution, organic acid ions are produced by dissociating the organic acid. In addition, the ammonia component is decreased as described above. Accordingly, the third aqueous solution becomes an acid aqueous solution.

<<Addition of Transition Metal Salt (105)>>

The manufacturing method of the present embodiment includes manufacturing an aqueous solution composition by mixing an acid aqueous solution containing at least a cobalt salt into the third aqueous solution.

The "transition metal salt" in the present specification shall include an inorganic acid salt and a chloride. The acid aqueous solution contains at least a Co salt. The Co salt may be cobalt nitrate, cobalt chloride, or the like, for example. Mixing operation is performed at room temperature, for example. Since the third aqueous solution is an acid aqueous solution, the third aqueous solution is easily mixed with the acid aqueous solution containing the Co salt.

The acid aqueous solution containing the Co salt may further contain at least one selected from the group consisting of a V salt, a Cr salt, a Zr salt, a Nb salt, a Ta salt, a Hf salt, and a Mn salt. Alternatively, an acid aqueous solution containing a V salt or the like may be prepared separately, and mixed into the third aqueous solution together with the acid aqueous solution containing the Co salt.

Through the above procedure, the aqueous solution composition is manufactured. The aqueous solution composition is manufactured to contain more than or equal to 10 mass% and less than or equal to 30 mass% of tungstate ions relative to 1 kg of water, more than or equal to 0.05 mass% and less than or equal to 5 mass% of transition metal ions relative to 1 kg of water, and a remainder of counter anions (such as organic acid ions) and water.

<<Spray-drying (200)>>

The manufacturing method of the present embodiment includes manufacturing an oxide powder by spray-drying the aqueous solution composition at a temperature of more than or equal to 500°C and less than or equal to 1500°C by a spray pyrolysis technique.

Here, a spray pyrolysis device is used. The spray pyrolysis device includes an atomization portion, a reaction portion, and a collection portion. The reaction portion is a tubular furnace. The reaction portion has a first end portion and a second end portion. The second end portion is located opposite to the first end portion. The first end portion is connected to the atomization portion. The second end portion is connected to the collection portion. The aqueous solution composition is atomized by the atomization portion. The atomized aqueous solution composition is dried and oxidized by the reaction portion. Thereby, oxide particles are produced. The oxide particles are collected by the collection portion.

The atomization portion atomizes the aqueous solution composition using ultrasonic waves, for example. An ultrasonic element may have the same configuration as that of a home humidifier, for example. The ultrasonic element may be an element having an oscillation frequency of about 1.65 MHz or 2.45 MHz, for example.

The atomized aqueous solution composition is introduced into the reaction portion (tubular furnace) together with a carrier gas. The carrier gas may be air, for example. The carrier gas may have a flow rate of more than or equal to 1 L/min and less than or equal to 10 L/min, for example. The tubular furnace may have an inner diameter of more than or equal to 10 mm and less than or equal to 60 mm, for example. By adjusting the length of the tubular furnace, the form of the oxide particles is controlled to be porous and spherical. The tubular furnace may have a length of more than or equal to 1500 mm and less than or equal to 2000 mm, for example.

The temperature within the tubular furnace is adjusted to more than or equal to 500°C and less than or equal to 1500°C. The temperature within the tubular furnace is measured with a temperature sensor attached to the spray pyrolysis device. If the measured value of the temperature sensor is more than or equal to 500°C and less than or equal to 1500°C, it shall be considered that the aqueous solution composition is spray-dried at a temperature of more than or equal to 500°C and less than or equal to 1500°C.

By heating the atomized aqueous solution composition to more than or equal to 500°C, production of $WO_3$ (non-solid solution) is suppressed. The atomized aqueous solution composition can be oxidized at a temperature of less than or equal to 1500°C. Thereby, grain growth of the oxide particles is suppressed. The temperature within the tubular furnace may be more than or equal to 500°C and less than or equal to 1400°C, may be more than or equal to 500°C and less than or equal to 1300°C, may be more than or equal to 500°C and less than or equal to 1200°C, may be more than or equal to 700°C and less than or equal to 1200°C, may be more than or equal to 900°C and less than or equal to 1200°C, or may be more than or equal to 1050°C and less than or equal to 1150°C. Thereby, suppression of production of $WO_3$ in which Co is not dissolved, and suppression of grain growth are expected.

The collection portion is connected to a vacuum pump. The oxide particles are sucked by the vacuum pump and introduced into the collection portion. The collection portion has a filter. The filter may be made of polytetrafluoroethylene (PTFE), for example. The filter may have a pore size of 0.1 $\mu$m, for example. The oxide particles adhere to the filter. Thereby, the oxide particles (oxide powder) are collected.

<<Carbonization (300)>>

The manufacturing method of the present embodiment includes manufacturing a carbide powder by heating the oxide powder in an inert atmosphere in co-presence of an organic nitrogen compound containing at least one of a cyano group and an amino group.

To carbonize the oxide powder, a tubular furnace is used, for example. The tubular furnace may have an inner diameter of more than or equal to 10 mm and less than or equal to 60 mm, for example. The tubular furnace may be made of alumina, for example. The inert atmosphere is formed within the tubular furnace by flowing an inert gas within the tubular furnace. The inert gas may be nitrogen ($N_2$) gas, for example. The inert gas may have a flow rate of more than or equal to 0.05 L/min and less than or equal to 0.15 L/min, for example.

The wording "in co-presence of an organic nitrogen compound" in the present specification refers to a state where the oxide powder is in contact with the organic nitrogen compound. The organic nitrogen compound may be a solid, a liquid, or a gas. The organic nitrogen compound may be at least one selected from the group consisting of urea (a solid), polyacrylonitrile (a solid), a melamine resin (a solid), and acetonitrile (a liquid). These organic nitrogen compounds contain at least one of the cyano group and the amino group. By heating the oxide powder in the co-presence of such an organic nitrogen compound, fine carbide particles are produced. The carbide particles can have an average particle size of less than or equal to 10 nm.

When the organic nitrogen compound is a solid, a mixture may be prepared by mixing the oxide powder with the organic nitrogen compound, for example. By heating the mixture within the tubular furnace, the oxide powder can be carbonized. When the organic nitrogen compound is a liquid, the organic nitrogen compound may be atomized, for example. In this case, the inert gas functions as a carrier gas. That is, the atomized organic nitrogen compound can be supplied to the tubular furnace using the inert gas. By heating the oxide powder in an atmosphere including the atomized organic nitrogen compound, the oxide powder can be carbonized. The supply quantity of the organic nitrogen compound is adjusted as appropriate depending on the type of the organic nitrogen compound, the quantity of the oxide powder, and the like, for example.

The oxide powder is heated to more than or equal to 600°C and less than or equal to 1000°C, for example. The heating time may be more than or equal to 6 hours and less than or equal to 18 hours, for example.

<<Sintering (400)>>

The manufacturing method of the present embodiment includes manufacturing a cemented carbide by sintering the carbide powder.

For example, the carbide powder is pressurized. Thereby, a green compact is formed. Then, the green compact is heated. Thereby, the cemented carbide is manufactured.

Co powder may be mixed into the carbide powder. Thereby, a cemented carbide including a binder phase (undissolved Co) can be manufactured. For mixing operation, an attritor and a ball mill are used, for example. The mixing operation may be a dry-type operation, or a wet-type operation. The "dry-type" indicates that no solvent is used during mixing. The "wet-type" indicates that a solvent is used during mixing. When a wet-type mixing operation is performed, for example, ethanol may be used as a solvent.

The green compact is formed by pressurizing the carbide powder (or the mixture of the carbide powder and the Co powder). The carbide powder is pressurized with a cold isostatic pressing (CIP) device, for example. Prior to the pressurization with the CIP device, the carbide powder may be temporarily molded.
In the CIP device, the carbide powder is pressurized at more than or equal to 150 MPa and less than or equal to 250 MPa, for example.

Prior to the sintering, the green compact may be heated in a hydrogen ($H_2$) gas atmosphere. Thereby, Co carbide which does not form a composite carbide is reduced to metal Co. The green compact is heated to more than or equal to 300°C and less than or equal to 500°C, for example, in the hydrogen gas atmosphere. The heating time may be more than or equal to 30 minutes and less than or equal to 2 hours, for example. When the green compact is sintered, the metal Co is changed into a liquid phase. That is, Co liquid-phase sintering is performed. Thereby, densification of the cemented carbide is expected.

By heating the green compact, the cemented carbide (sintered body) is manufactured. Heating is performed in an argon gas atmosphere, a nitrogen gas atmosphere, a mixed gas atmosphere of argon gas and hydrogen gas, or a mixed gas atmosphere of nitrogen gas and hydrogen gas, for example. The green compact is heated to more than or equal to 1250°C and less than or equal to 1450°C, for example. The heating time may be more than or equal to 30 minutes and less than or equal to 2 hours, for example.

The cemented carbide may be manufactured by spark plasma sintering (SPS). In SPS, the temperature rising time and the heating time are short. Accordingly, suppression of grain growth is expected. In SPS, for example, the cemented carbide is manufactured as described below.

The carbide powder is filled into a predetermined mold. The mold is made of graphite, for example. The mold is set in an SPS device to sinter the carbide powder. During the sintering, the pressure may be set to more than or equal to 40 MPa and less than or equal to 60 MPa, for example. During the sintering, a pulse current output may be set to more than or equal to 1500 A and less than or equal to 2500 A, for example.

Examples

Examples will be described below. However, the following examples do not limit the invention of the present disclosure.

1. Manufacturing of Aqueous Solution Composition

The following materials were prepared.

Ammonia water: ammonia water (10 mass%), manufactured by Wako Pure Chemical Industries, Ltd.
Tungsten oxide: type "$F_1$-$WO_3$", manufactured by Allied Material Corp.
Organic acid: anhydrous citric acid
Transition metal salt: cobalt nitrate powder, manufactured by Wako Pure Chemical Industries, Ltd.

<<Aqueous Solution Composition No. 1>>

1-1. Dissolution of Tungsten Oxide (101)

1 L of ammonia water and 200 g of $WO_3$ powder were put into a beaker. The ammonia water and the $WO_3$ powder were stirred for 24 hours using a stirrer. Thereby, $WO_3$ was dissolved in the ammonia water. That is, a first aqueous solution was prepared.

1-2. Addition of Organic Acid (102)

180 g of anhydrous citric acid was put into the first aqueous solution. The first aqueous solution and the anhydrous citric acid were stirred using a stirrer. Thereby, the anhydrous citric acid was dissolved in the first aqueous solution. That is, a second aqueous solution was prepared.

1-3. Drying (103)

The second aqueous solution was put into a commercially available 2-L glass beaker. The 2-L glass beaker was placed within a constant-temperature dryer. The second aqueous solution was dried for 24 hours within the constant-temperature dryer. The set temperature of the constant-temperature dryer was 150°C. 150°C is a temperature lower than the decomposition temperature of the anhydrous citric acid (175°C). A dry solid matter was produced by evaporating the moisture from the second aqueous solution.

1-4. Re-dissolution (104)

The dry solid matter was put into a beaker. 1 L of water was put into the beaker. The dry solid matter and the water were stirred using a stirrer. Thereby, the dry solid matter was dissolved in the water. That is, a third aqueous solution was prepared.

1-5. Addition of Transition Metal Salt (105)

Water and cobalt nitrate were put into a beaker. The water and the cobalt nitrate were stirred using a stirrer. Thereby, a cobalt nitrate aqueous solution (an acid aqueous solution of a Co salt) was prepared. The concentration of the cobalt nitrate aqueous solution was adjusted to 500 g/L.

100 mL of the cobalt nitrate aqueous solution was mixed into the third aqueous solution. The cobalt nitrate aqueous solution was uniformly mixed with the third aqueous solution. That is, a transition metal salt (Co salt) was dissolved in the third aqueous solution. Through the above procedure, an aqueous solution composition No. 1 was manufactured.

<<Aqueous Solution Compositions Nos. 2 to 8>>

A vanadium chloride (III) powder (manufactured by Wako Pure Chemical Industries, Ltd.) was prepared. In the addition of the transition metal salt (105), 1 g of the vanadium chloride (III) powder was further dissolved in the cobalt nitrate aqueous solution. Except for this, an aqueous solution composition No. 2 was manufactured through the same procedure as that for aqueous solution composition No. 1.

Aqueous solution compositions Nos. 3 to 8 were manufactured through the same procedure as that for aqueous solution composition No. 2 except that vanadium chloride (III) was changed to a Cr salt, a Mn salt, a Zr salt, a Nb salt, a Hf salt, or Ta.

[Table 1]

Table 1 List of Aqueous Solution Compositions

| No. | Composition [mass%][*1] | | | | |
|---|---|---|---|---|---|
| | Tungstate Ions | Transition Metal Ions | | Remainder | |
| | | Co Ions | Others | Counter Anions | |
| | | | | Organic Acid Ions | Others |
| 1 | 16 | 1.6 | - | Citrate Ions | Nitrate Ions |
| 2 | 16 | 1.6 | 0.03 (V Ions) | Citrate Ions | Nitrate Ions, Chloride Ions |
| 3 | 16 | 1.6 | 0.03 (Cr Ions) | Citrate Ions | Nitrate Ions, Chloride Ions |
| 4 | 16 | 1.6 | 0.03 (Mn Ions) | Citrate Ions | Nitrate Ions, Chloride Ions |
| 5 | 16 | 1.6 | 0.03 (Zr Ions) | Citrate Ions | Nitrate Ions, Chloride Ions |
| 6 | 16 | 1.6 | 0.03 (Nb Ions) | Citrate Ions | Nitrate Ions, Chloride Ions |
| 7 | 16 | 1.6 | 0.03 (Hf Ions) | Citrate Ions | Nitrate Ions, Chloride Ions |
| 8 | 16 | 1.6 | 0.03 (Ta Ions) | Citrate Ions | Nitrate Ions, Chloride Ions |
| (*1) mass% relative to 1 kg of water | | | | | |

2. Manufacturing of Oxide Powder [Spray-drying (200)]

<<Oxide Powder No. 1>>

A spray pyrolysis device was prepared. Aqueous solution composition No. 1 was introduced into an atomization portion of the spray pyrolysis device. The aqueous solution composition was atomized by an ultrasonic element in the atomization portion. The oscillation frequency of the ultrasonic element was set to 1.65 MHz. The atomized aqueous solution composition was introduced into a reaction portion (tubular furnace) using a carrier gas. Air was used as the carrier gas. The flow rate of the carrier gas was set to 2 L/min.

The tubular furnace had an inner diameter of 40 mm, and a length of 1800 mm. The temperature within the tubular furnace was set to 1100°C. Within the tubular furnace, the atomized aqueous solution composition was dried and further oxidized. Thereby, oxide particles were produced.

The oxide particles were collected in a collection portion. A filter made of PTFE (pore size: 0.1 $\mu$m) was used as a filter of the collection portion. Through the above procedure, an oxide powder No. 1 was manufactured.

By the method described above, the average particle size of the oxide particles included in oxide powder No. 1 was measured. The average particle size was 1 $\mu$m.

<<Oxide Powders Nos. 2 to 8>>

Oxide powders Nos. 2 to 8 were manufactured through the same procedure as that for oxide powder No. 1 except that aqueous solution compositions Nos. 2 to 8 were used instead of aqueous solution composition No. 1.

3. Manufacturing of Carbide Powder [Carbonization (300)]

The following materials were prepared.

Organic nitrogen compound (solid): polyacrylonitrile powder, manufactured by Wako Pure Chemical Industries, Ltd.

Organic nitrogen compound (liquid): acetonitrile, manufactured by Wako Pure Chemical Industries, Ltd.

<<Carbide Powder No. 1>>

An alumina tubular furnace was prepared. The alumina tubular furnace had an inner diameter of 40 mm. 15g of oxide powder No. 1 and 50 g of polyacrylonitrile powder were weighed respectively. A mixture of the oxide powder and the polyacrylonitrile powder was placed within the alumina tubular furnace. Nitrogen gas was flowed within the alumina tubular furnace. The flow rate of the nitrogen gas was set to 0.1 L/min. The mixture was heated at 800°C for 12 hours. Thereby, a carbide powder No. 1 was manufactured.

<<Carbide Powder No. 2>>

Oxide powder No. 1 was placed within the alumina tubular furnace. 1 L of acetonitrile was put into a gas washing bottle at ordinary temperature (20°C). The gas washing bottle was connected to a gas pipe. The gas pipe was connected to the alumina tubular furnace. Nitrogen gas was introduced into the alumina tubular furnace through the gas washing bottle. The acetonitrile was bubbled by the nitrogen gas. That is, the acetonitrile atomized by bubbling was supplied to the alumina tubular furnace. The oxide powder was heated at 800°C for 12 hours. Thereby, a carbide powder No. 2 was manufactured. Carbide powder No. 2 is a sample carbonized in the co-presence of a liquid organic nitrogen compound.

<<Carbide Powders Nos. 3 to 9>>

Carbide powders Nos. 3 to 9 were manufactured through the same procedure as that for carbide powder No. 1 except that oxide powders No. 2 to No. 8 were used instead of oxide powder No. 1.

By the method described above, the composition and the average particle size of carbide particles were measured. Table 2 below shows results. In Table 2, polyacrylonitrile is abbreviated as "PAN", and acetonitrile is abbreviated as "MeCN".

[Table 2]

Table 2 List of Carbide Powders

| No. | Aqueous Solution Composition No. | Oxide Powder No. | Carbonization | Carbide Particles | | | |
|-----|------|------|------|------|------|------|------|
| | | | Organic Nitrogen Compound | Composition [mass%] | | | Average Particle Size [nm] |
| | | | | Transition Metal | | Remainder | |
| | | | | Co | Others | | |
| 1 | 1 | 1 | PAN | 10 | - | W, C | 5 |
| 2 | 1 | 1 | MeCN | 10 | - | W, C | 5 |
| 3 | 2 | 2 | PAN | 10 | 1 (V) | W, C | 5 |
| 4 | 3 | 3 | PAN | 10 | 1 (Cr) | W, C | 5 |
| 5 | 4 | 4 | PAN | 10 | 1 (Mn) | W, C | 5 |
| 6 | 5 | 5 | PAN | 10 | 1 (Zr) | W, C | 5 |
| 7 | 6 | 6 | PAN | 10 | 1 (Nb) | W, C | 5 |
| 8 | 7 | 7 | PAN | 10 | 1 (Hf) | W, C | 5 |
| 9 | 8 | 8 | PAN | 10 | 1 (Ta) | W, C | 5 |

4. Manufacturing of Cemented Carbide [Sintering (400)]

The following material was prepared.
Transition metal powder: Co powder, manufactured by Kojundo Chemical Laboratory Co., Ltd.

<<Cemented Carbide No. 1>>

10 g of carbide powder No. 1 and 0.2 g of Co powder were put into an attritor. The carbide powder and the Co powder were wet-mixed. Ethanol was used as a solvent. Thereby, a mixture was prepared. The mixture was filled into a tablet mold. The mixture was molded under a pressure of 50 MPa. Thereby, a molded body was prepared. The molded body was vacuum-encapsulated in a plastic bag. The molded body was set in a CIP device. The molded body was pressurized at 200 MPa. Thereby, a green compact was prepared.

The green compact was heated at 400°C for 1 hour in a hydrogen gas atmosphere. Thereby, Co carbide was reduced to metal Co in the green compact. The green compact was heated at 1350°C for 1 hour in an argon gas atmosphere. Thereby, the green compact was sintered. It is considered that the metal Co was changed into a liquid phase during sintering. That is, it is considered that the green compact was sintered by Co liquid-phase sintering. Through the above procedure, a cemented carbide No. 1 was manufactured.

<<Cemented Carbide No. 2>>

A cemented carbide No. 2 was manufactured through the same procedure as that for cemented carbide No. 1 except that carbide powder No. 3 was used instead of carbide powder No. 1.

<<Cemented Carbide No. 3 >>

A cemented carbide No. 3 was manufactured through the same procedure as that for cemented carbide No. 1 except that carbide powder No. 2 was used instead of carbide powder No. 1.

<<Cemented Carbide No. 4>>

An SPS device "Doctor Sinter (SPS-615)" manufactured by Fuji Electronic Industrial Co., Ltd. was prepared. 5 g of carbide powder No. 1 was filled into a graphite mold having a diameter of 10 mm. The graphite mold was set in the SPS device. The carbide powder was sintered by the SPS device. The pressure was set to 50 MPa, and the pulse current output was set to 2000 A. Thereby, a cemented carbide No. 4 was manufactured.

<<Cemented Carbide No. 5>>

A commercially available WC powder (model name "WC02NRP" manufactured by Allied Material Corp.) was prepared. 10 g of the WC powder and 0.5 g of Co powder were put into an attritor. The WC powder and the Co powder were wet-mixed. Ethanol was used as a solvent. Thereby, a mixture was prepared. The mixture was filled into a tablet mold. The mixture was molded under a pressure of 50 MPa. Thereby, a molded body was prepared. The molded body was vacuum-encapsulated in a plastic bag. The molded body was set in a CIP device. The molded body was pressurized at 200 MPa. Thereby, a green compact was prepared.

The green compact was heated at 1400°C for 1 hour in an argon gas atmosphere. Thereby, the green compact was sintered. It is considered that metal Co was changed into a liquid phase during sintering. That is, it is considered that the green compact was sintered by Co liquid-phase sintering. Through the above procedure, a cemented carbide No. 5 was manufactured. Cemented carbide No. 5 is a cemented carbide manufactured by a conventional powder metallurgy process.

By the method described above, the average particle size of solid solution particles and the Vickers hardness of each cemented carbide were measured. Table 3 below shows results.

[Table 3]

Table 3 List of Cemented Carbides

| No. | Carbide Powder No. | Sintering | Cemented Carbide | | | | | Vickers Hardness [HV0.1] |
|---|---|---|---|---|---|---|---|---|
| | | | Solid Solution Particles | | | | Binder Phase (Co) [mass%] | |
| | | | Composition [mass%] | | | Average Particle Size [nm](*2) | | |
| | | | Transition Metal | | Remainder | | | |
| | | | Co | V | | | | |
| 1 | 1 | Co Liquid-phase Sintering | 8 | - | W, C | 35 | 2 | 2800 |
| 2 | 3 | Co Liquid-phase Sintering | 9 | 0.5 | W, C | 25 | 1 | 3000 |
| 3 | 2 | Co Liquid-phase Sintering | 8 | - | W, C | 35 | 2 | 2800 |
| 4 | 1 | SPS | 10 | - | W, C | 20 | - | 3200 |
| 5 | WC (Non-solid Solution) Powder | Co Liquid-phase Sintering | - | - | W, C | 1000-2000 | 5 | 1550 |
| (*2) For No. 5, the range of the particle size of WC particles is indicated. | | | | | | | | |

<Results and Consideration>

As shown in Table 3 above, cemented carbides Nos. 1 to 4 had high Vickers hardnesses. This is considered to be because they each include solid solution particles having an average particle size of less than or equal to 50 nm, as constituent particles.

Cemented carbide No. 2 had a smaller average particle size than those of cemented carbides Nos. 1 and 3. This is considered to be because grain growth was suppressed by V during sintering.

Cemented carbide No. 4 sintered by SPS had a particularly small average particle size. This is considered to be because the temperature rising time and the heating time are short in SPS.

It should be understood that the embodiment and the examples disclosed herein are illustrative and non-restrictive in every respect. The technical scope determined by the scope of the claims is defined by the scope of the claims, rather than the embodiment and the examples described above, and is intended to include any modifications within the scope and meaning equivalent to the scope of the claims.

REFERENCE SIGNS LIST

101: dissolution of tungsten oxide; 102: addition of organic acid; 103: drying; 104: re-dissolution; 105: addition of transition metal salt; 200: spray-drying; 300: carbonization; 400: sintering.

**Claims**

1. An aqueous solution composition containing:

   more than or equal to 10 mass% and less than or equal to 30 mass% of tungstate ions relative to 1 kg of water;
   more than or equal to 0.05 mass% and less than or equal to 5 mass% of transition metal ions relative to 1 kg of water; and
   a remainder of counter anions and water,
   the transition metal ions including cobalt ions,
   the counter anions including organic acid ions,
   the organic acid ions being multidentate ligands.

2. The aqueous solution composition according to claim 1, wherein the transition metal ions further include at least one selected from the group consisting of vanadium ions, chromium ions, zirconium ions, niobium ions, tantalum ions, hafnium ions, and manganese ions.

3. The aqueous solution composition according to claim 1 or 2, wherein a ratio of the tungstate ions to a total of the tungstate ions and the transition metal ions is more than or equal to 60 mol% and less than 100 mol%.

4. The aqueous solution composition according to any one of claims 1 to 3, wherein the organic acid ions include at least one selected from the group consisting of hydroxy acid ions, amino acid ions, and polycarboxylic acid ions.

5. The aqueous solution composition according to any one of claims 1 to 4, wherein the organic acid ions include at least one selected from the group consisting of citrate ions, gluconate ions, malate ions, alanine ions, arginine ions, aspartate ions, oxalate ions, succinate ions, maleate ions, and ethylenediaminetetraacetate ions.

6. An oxide powder comprising oxide particles having an average particle size of less than or equal to 2 $\mu$m,
   the oxide particles being porous and spherical,
   the oxide particles including a composite oxide,
   the composite oxide containing a transition metal, tungsten, and oxygen,
   the transition metal including cobalt.

7. The oxide powder according to claim 6, wherein the transition metal further includes at least one selected from the group consisting of vanadium, chromium, zirconium, niobium, tantalum, hafnium, and manganese.

8. A carbide powder comprising carbide particles having an average particle size of less than or equal to 10 nm,
   the carbide particles including a composite carbide,
   the composite carbide containing a transition metal, tungsten, and carbon,
   the transition metal including cobalt.

9. The carbide powder according to claim 8, wherein the transition metal further includes at least one selected from the group consisting of vanadium, chromium, zirconium, niobium, tantalum, hafnium, and manganese.

10. The carbide powder according to claim 8 or 9, wherein the composite carbide contains more than or equal to 0.1 mass% and less than or equal to 20 mass% of the transition metal, and a remainder of the tungsten and the carbon.

11. A cemented carbide comprising solid solution particles having an average particle size of less than or equal to 50 nm, the solid solution particles containing a transition metal, tungsten, and carbon,

the transition metal including cobalt.

12. The cemented carbide according to claim 11, wherein the transition metal further includes at least one selected from the group consisting of vanadium, chromium, zirconium, niobium, tantalum, hafnium, and manganese.

13. The cemented carbide according to claim 11 or 12, wherein the solid solution particles contain more than or equal to 0.1 mass% and less than or equal to 20 mass% of the transition metal, and a remainder of the tungsten and the carbon.

14. The cemented carbide according to any one of claims 11 to 13, further comprising a binder phase, wherein the binder phase contains cobalt which is not dissolved in the solid solution particles.

15. A cemented carbide comprising:

solid solution particles having an average particle size of less than or equal to 50 nm; and
a binder phase,
the solid solution particles containing more than or equal to 0.1 mass% and less than or equal to 20 mass% of a transition metal, and a remainder of tungsten and carbon,
the transition metal including cobalt,
the transition metal further including at least one selected from the group consisting of vanadium, chromium, zirconium, niobium, tantalum, hafnium, and manganese,
the binder phase containing cobalt which is not dissolved in the solid solution particles.

16. A method for manufacturing an aqueous solution composition, comprising:

preparing a first aqueous solution by dissolving a tungsten oxide in ammonia water;
preparing a second aqueous solution by dissolving an organic acid in the first aqueous solution;
preparing a dry solid matter by drying the second aqueous solution at a temperature lower than a decomposition temperature of the organic acid;
preparing a third aqueous solution by dissolving the dry solid matter in water; and
manufacturing an aqueous solution composition by mixing an acid aqueous solution containing at least a cobalt salt into the third aqueous solution.

17. The method for manufacturing the aqueous solution composition according to claim 16, wherein the acid aqueous solution further contains at least one selected from the group consisting of a vanadium salt, a chromium salt, a zirconium salt, a niobium salt, a tantalum salt, a hafnium salt, and a manganese salt.

18. A method for manufacturing an oxide powder, comprising:

preparing a first aqueous solution by dissolving a tungsten oxide in ammonia water;
preparing a second aqueous solution by dissolving an organic acid in the first aqueous solution;
preparing a dry solid matter by drying the second aqueous solution at a temperature lower than a decomposition temperature of the organic acid;
preparing a third aqueous solution by dissolving the dry solid matter in water;
manufacturing an aqueous solution composition by mixing an acid aqueous solution containing at least a cobalt salt into the third aqueous solution; and
manufacturing an oxide powder by spray-drying the aqueous solution composition at a temperature of more than or equal to 500°C and less than or equal to 1500°C by a spray pyrolysis technique.

19. A method for manufacturing a carbide powder, comprising:

preparing a first aqueous solution by dissolving a tungsten oxide in ammonia water;
preparing a second aqueous solution by dissolving an organic acid in the first aqueous solution;
preparing a dry solid matter by drying the second aqueous solution at a temperature lower than a decomposition temperature of the organic acid;
preparing a third aqueous solution by dissolving the dry solid matter in water;
manufacturing an aqueous solution composition by mixing an acid aqueous solution containing at least a cobalt salt into the third aqueous solution;

manufacturing an oxide powder by spray-drying the aqueous solution composition at a temperature of more than or equal to 500°C and less than or equal to 1500°C by a spray pyrolysis technique; and
manufacturing a carbide powder by heating the oxide powder in an inert atmosphere in co-presence of an organic nitrogen compound containing at least one of a cyano group and an amino group.

20. The method for manufacturing the carbide powder according to claim 19, wherein the organic nitrogen compound is at least one selected from the group consisting of urea, polyacrylonitrile, a melamine resin, and acetonitrile.

21. A method for manufacturing a cemented carbide, comprising:

preparing a first aqueous solution by dissolving a tungsten oxide in ammonia water;
preparing a second aqueous solution by dissolving an organic acid in the first aqueous solution;
preparing a dry solid matter by drying the second aqueous solution at a temperature lower than a decomposition temperature of the organic acid;
preparing a third aqueous solution by dissolving the dry solid matter in water;
manufacturing an aqueous solution composition by mixing an acid aqueous solution containing at least a cobalt salt into the third aqueous solution;
manufacturing an oxide powder by spray-drying the aqueous solution composition at a temperature of more than or equal to 500°C and less than or equal to 1500°C by a spray pyrolysis technique;
manufacturing a carbide powder by heating the oxide powder in an inert atmosphere in co-presence of an organic nitrogen compound containing at least one of a cyano group and an amino group; and
manufacturing a cemented carbide by sintering the carbide powder.

# FIG.1

```
                    START

                      ↓
        ┌──────────────────────────┐  101
        │   DISSOLUTION OF         │
        │   TUNGSTEN OXIDE         │
        └──────────────────────────┘
                      ↓
        ┌──────────────────────────┐  102
        │  ADDITION OF ORGANIC ACID │
        └──────────────────────────┘
                      ↓
        ┌──────────────────────────┐  103
        │         DRYING            │
        └──────────────────────────┘
                      ↓
        ┌──────────────────────────┐  104
        │      RE-DISSOLUTION       │
        └──────────────────────────┘
                      ↓
        ┌──────────────────────────┐  105
        │  ADDITION OF TRANSITION   │
        │  METAL SALT               │
        └──────────────────────────┘
                      ↓
        ┌──────────────────────────┐  200
        │      SPRAY-DRYING         │
        └──────────────────────────┘
                      ↓
        ┌──────────────────────────┐  300
        │      CARBONIZATION        │
        └──────────────────────────┘
                      ↓
        ┌──────────────────────────┐  400
        │       SINTERING           │
        └──────────────────────────┘
                      ↓
                     END
```

## INTERNATIONAL SEARCH REPORT

| International application No. |
| --- |
| PCT/JP2017/026157 |

A.  CLASSIFICATION OF SUBJECT MATTER
*C01G51/00*(2006.01)i, *C01B32/90*(2017.01)i, *C01B32/949*(2017.01)i, *C22C1/05* (2006.01)i, *C22C29/08*(2006.01)i

According to International Patent Classification (IPC) or to both national classification and IPC

B.  FIELDS SEARCHED

Minimum documentation searched (classification system followed by classification symbols)
C01G51/00, C01B32/90, C01B32/949, C22C1/05, C22C29/08

Documentation searched other than minimum documentation to the extent that such documents are included in the fields searched
Jitsuyo Shinan Koho            1922-1996   Jitsuyo Shinan Toroku Koho   1996-2017
Kokai Jitsuyo Shinan Koho      1971-2017   Toroku Jitsuyo Shinan Koho   1994-2017

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>A | JP 10-259057 A  (Nanodyne Inc.),<br>29 September 1998 (29.09.1998),<br>claims; paragraphs [0006], [0008], [0009],<br>[0011], [0016], [0019]<br>& EP 846658 A1<br>claims; example 3; column 2, lines 9 to 23, 36<br>to 52; column 3, lines 20 to 25; column 4,<br>lines 27 to 29<br>& CA 2221432 A1            & ZA 9710389 B<br>& MX 9709516 A | 1-5<br>6-21 |
| X<br>A | JP 2007-262475 A  (Kyocera Corp.),<br>11 October 2007 (11.10.2007),<br>claims; paragraphs [0021], [0027] to [0035]<br>(Family: none) | 6-15<br>1-5,16-21 |

☒  Further documents are listed in the continuation of Box C.        ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 11 September 2017 (11.09.17) | 03 October 2017 (03.10.17) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

| International application No. |
| --- |
| PCT/JP2017/026157 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | WO 2010/079752 A1  (Fukuoka-Ken),<br>15 July 2010 (15.07.2010),<br>entire text<br>& US 2011/0268969 A1    & DE 112010000825 T5 | 1-21 |
| A | JP 51-83900 A  (United Technologies Corp.),<br>22 July 1976 (22.07.1976),<br>entire text<br>& DE 2553373 A1          & FR 2294133 A1<br>& NL 7514033 A           & SE 7513490 A<br>& AU 8655875 A           & IT 1054433 B | 1-21 |
| A | JP 2008-106369 A  (UMICORE),<br>08 May 2008 (08.05.2008),<br>entire text<br>& JP 10-265811 A         & US 5885372 A<br>& EP 834589 A1           & DE 69712288 T2<br>& CA 2215646 A1          & AT 217033 T<br>& ZA 9708155 B           & MX 9707532 A<br>& KR 10-0425873 B1 | 1-21 |
| A | JP 8-6129 B2  (Procedyne Corp.),<br>24 January 1996 (24.01.1996),<br>entire text<br>& JP 4-502650 A          & US 5352269 A<br>& US 5651808 A           & US 5230729 A<br>& WO 1991/007244 A1      & EP 452480 A1<br>& NO 912662 A            & AU 6903091 A<br>& AU 635378 B            & CA 2045125 A1<br>& KR 10-1996-0002416 B1 | 1-21 |
| A | JP 10-265811 A  (Nanodyne Inc.),<br>06 October 1998 (06.10.1998),<br>entire text<br>& JP 2008-106369 A       & US 5885372 A<br>& EP 834589 A1           & DE 69712288 T2<br>& CA 2215646 A1          & AT 217033 T<br>& ZA 9708155 B           & MX 9707532 A<br>& KR 10-0425873 B1 | 1-21 |
| A | JP 2001-164375 A  (Sony Corp.),<br>19 June 2001 (19.06.2001),<br>entire text<br>(Family: none) | 1-21 |
| A | JP 2012-74682 A  (Shibaura Institute of Technology),<br>12 April 2012 (12.04.2012),<br>entire text<br>(Family: none) | 1-21 |

Form PCT/ISA/210 (continuation of second sheet) (January 2015)

**INTERNATIONAL SEARCH REPORT**

| International application No. |
| --- |
| PCT/JP2017/026157 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2008-138291 A (UMICORE),<br>19 June 2008 (19.06.2008),<br>entire text<br>& JP 9-111389 A          & US 5841045 A<br>& EP 763605 A2          & CA 2184031 A1<br>& ZA 9606642 A | 1-21 |
| A | JP 2010-77524 A (Hyogo-Ken),<br>08 April 2010 (08.04.2010),<br>entire text<br>& US 2011/0243787 A1     & WO 2010/024159 A1<br>& EP 2332675 A1          & CN 102131601 A | 1-21 |
| A | JP 50-92899 A (Tokyo Shibaura Electric Co.,<br>Ltd.),<br>24 July 1975 (24.07.1975),<br>entire text<br>(Family: none) | 1-21 |
| A | JP 7-500804 A (Rutgers, The State University<br>of New Jersey),<br>26 January 1995 (26.01.1995),<br>entire text<br>& US 5230729 A          & US 5651808 A<br>& WO 1993/002962 A1     & EP 598040 A1<br>& DE 69202862 T2         & CA 2114639 A1<br>& KR 10-0196244 B1 | 1-21 |

Form PCT/ISA/210 (continuation of second sheet) (January 2015)

<table>
<tr><td>**INTERNATIONAL SEARCH REPORT**</td><td>International application No.<br>PCT/JP2017/026157</td></tr>
</table>

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    See extra sheet.

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (January 2015)

**INTERNATIONAL SEARCH REPORT**

| International application No. |
| --- |
| PCT/JP2017/026157 |

Continuation of Box No.III of continuation of first sheet(2)

Document 1: JP 10-259057 A (Nanodyne Inc.) 29 September 1998 (29.09.1998), claims; paragraphs [0006], [0008], [0009], [0011], [0016], [0019] & EP 846658 A1 claims; example 3; column 2, lines 9 to 23, 36 to 52; column 3, lines 20 to 25; column 4, lines 27 to 29 & CA 2221432 A1 & ZA 9710389 B & MX 9709516 A

Document 2: JP 2007-262475 A (Kyocera Corp.) 11 October 2007 (11.10.2007), claims; paragraphs [0021], [0027] to [0035] (Family: none)

Claims are classified into the following five inventions.

(Invention 1) claims 1-5

Document 1 describes an invention relating to a method for producing a metal carbide, which comprises producing a solution of a first metal carbide-forming composition and an organic acid; drying the solution to produce a solid material containing the first metal carbide-forming composition and the organic acid; calcining the solid material in an inert environment to produce a partially carburized first metal; and heating the partially carburized first metal in a carburizing atmosphere to accomplish the carburizing of the partially carburized first metal, thereby producing the metal carbide. In document 1, it is described that: the first metal carbide-forming composition contains at least one metal selected from the group consisting of tungsten, chromium, vanadium and niobium; the method further comprises adding a composition containing a binder metal (e.g., cobalt) to the solution; the organic acid is selected from the group consisting of an amino acid, malic acid, maleic acid, oxalic acid, tartaric acid, acetic acid, propionic acid and formic acid; and the metal carbide is used in a cutting tool. In the section "examples", it is described concretely that 20.55 g of malic acid and 10 g of ammonium para-tungstate (APT) are added to 50 mL of deionized water and then cobalt acetate is added to the solution so that 6 to 15% of Co can be contained.

In this regard, in the above-mentioned example, it is estimated that APT is contained in an amount of 20 mass% relative to 1 kg of water and Co is contained in an amount of 1.2 to 3 mass% relative to 1 kg of water.

Consequently, the inventions of claims 1-5 have no special technical feature, since the inventions lack novelty in the light of the document 1.

Consequently, claims 1-5 are classified into Invention 1.

(Invention 2) claims 6 and 7

Document 2 relates to a super hard alloy powder and a method for the production thereof. In the section "examples", it is described concretely that a super hard alloy powder is produced by: spray-drying a W-Co-containing aqueous solution, which contains meta-tungstic acid ammonium salt and cobalt nitrate, by feeding hot air at 250°C to produce a precursor powder containing W and Co; heating the precursor powder in a nitrogen atmosphere at 700°C for 2 hours to thermally decompose and remove excess water, ammonia and the like, thereby producing a composite oxide; and subjecting the composite oxide to a heat treatment in a $CO/H_2$ gas atmosphere to reduce/carbonize the composite oxide, thereby producing the super hard alloy powder. In the section "examples", it is also described concretely that the average particle diameter of the precursor powder is 2 μm, the average particle diameter of WC is 10 nm, 20 nm or 50 nm, the mass content ratio of Co is 8% by mass, and VC is added as an additive.

In this regard, in document 2, it is described that the precursor produced as the result of the spray drying contains a W-Co oxide. Therefore, it is considered that the precursor powder is an oxide powder.

(Continued to next extra sheet)

Form PCT/ISA/210 (extra sheet) (January 2015)

**INTERNATIONAL SEARCH REPORT**

International application No.

PCT/JP2017/026157

Consequently, the inventions of claims 6 and 7 have no special technical feature, since the inventions lack novelty in the light of the document 2.

Claims 6 and 7 have no relationship such that these claims are substantially same as or equivalent to any claim classified into Invention 1.

Consequently, claims 6 and 7 cannot be classified into Invention 1, and are therefore classified into Invention 2.

(Invention 3) claims 8-10

Document 2 relates to a super hard alloy powder and a method for the production thereof. In the section "examples", it is described concretely that a super hard alloy powder is produced by: spray-drying a W-Co-containing aqueous solution, which contains meta-tungstic acid ammonium salt and cobalt nitrate, by feeding hot air at 250°C to produce a precursor powder containing W and Co; heating the precursor powder in a nitrogen atmosphere at 700°C for 2 hours to thermally decompose and remove excess water, ammonia and the like, thereby producing a composite oxide; and subjecting the composite oxide to a heat treatment in a $CO/H_2$ gas atmosphere to reduce/carbonize the composite oxide, thereby producing the super hard alloy powder. In the section "examples", it is also described concretely that the average particle diameter of the precursor powder is 2 μm, the average particle diameter of WC is 10 nm, 20 nm or 50 nm, the mass content ratio of Co is 8% by mass, and VC is added as an additive.

In this regard, Co forms a composite oxide in conjunction with W previously and is then reduced/carbonized. Therefore, it is considered that at least a portion of Co exists in the form of a solid solution which is formed in conjunction with W.

Consequently, the inventions of claims 8-10 have no special technical feature, since the inventions lack novelty in the light of the document 2.

Claims 8-10 have no relationship such that these claims are substantially same as or equivalent to any claim classified into Inventions 1, 2.

Consequently, claims 8-10 cannot be classified into Invention, 1, 2, and are therefore classified into Invention 3.

(Invention 4) claims 11-15Document 2 relates to a super hard alloy powder and a method for the production thereof. In the section "examples", it is described concretely that a super hard alloy powder is produced by: spray-drying a W-Co-containing aqueous solution, which contains meta-tungstic acid ammonium salt and cobalt nitrate, by feeding hot air at 250°C to produce a precursor powder containing W and Co; heating the precursor powder in a nitrogen atmosphere at 700°C for 2 hours to thermally decompose and remove excess water, ammonia and the like, thereby producing a composite oxide; and subjecting the composite oxide to a heat treatment in a $CO/H_2$ gas atmosphere to reduce/carbonize the composite oxide, thereby producing the super hard alloy powder.

In the section "examples", it is also described concretely that the average particle diameter of the precursor powder is 2 μm, the average particle diameter of WC is 10 nm, 20 nm or 50 nm, the mass content ratio of Co is 8% by mass, and VC is added as an additive.

In this regard, Co forms a composite oxide in conjunction with W previously and is then reduced/carbonized. Therefore, it is considered that at least a portion of Co forms a solid solution in conjunction with W and at least a portion of Co exists in the form of a bonded phase.

(Continued to next extra sheet)

Form PCT/ISA/210 (extra sheet) (January 2015)

**INTERNATIONAL SEARCH REPORT**

International application No.

PCT/JP2017/026157

Consequently, the inventions of claims 11-14 have no special technical feature, since the inventions lack novelty in the light of the document 2.

Claims 11-14 have no relationship such that these claims are substantially same as or equivalent to any claim classified into Inventions 1-3.

Consequently, claims 11-14 cannot be classified into Inventions 1-3, and are therefore classified into Invention 4.

Further, claim 15 is substantially dependent on claim 11 and has an inventive relationship with claim 11, and is therefore classified into Invention 4.

(Invention 5) claims 16-21

Claims 16 and 17 are not dependent on any one of claims 1, 6, 8, 11 and 15.

Further, claims 16 and 17 have no relationship such that these claims are substantially same as or equivalent to any claim classified into Inventions 1-4.

Consequently, claims 16 and 17 cannot be classified into any one of Inventions 1-4.

And claims 16 and 17 have special technical features "preparing a first aqueous solution", "preparing a dried solid material" and "preparing a third aqueous solution", and are therefore classified into Invention 5.

Further, claims 18-21 are substantially dependent on claim 16 and have an inventive relationship with claim 16, and are therefore classified into Invention 5.

Form PCT/ISA/210 (extra sheet) (January 2015)

**REFERENCES CITED IN THE DESCRIPTION**

**Patent documents cited in the description**

- JP 2016167856 A
- JP 2010077523 A
- JP 2010024160 A
- JP 2010077524 A
- JP 2010024159 A
- JP S59025950 B
- JP 2010079752 A
- JP 2003112916 A